# EUROPEAN PATENT SPECIFICATION

(11) **EP 0 839 168 B1**
(45) Date of publication and mention of the grant of the patent: **25.08.1999**
(21) Application number: 95926663.6
(22) Date of filing: 14.07.1995
(51) Int. Cl.: C09D 5/03, B05D 7/14

(54) **METAL SUBSTRATE WITH ENHANCED CORROSION RESISTANCE AND IMPROVED PAINT ADHESION**
METALLSUBSTRAT MIT HÖHERER KORROSIONSBESTÄNDIGKEIT UND VERBESSERTER LACKIERFÄHIGKEIT
SUBSTRAT EN METAL A RESISTANCE A LA CORROSION ACCRUE ET ADHESION DE PEINTURE AMELIOREE

(43) Date of publication of application: 06.05.1998
(73) Proprietor: Armco Inc., Middletown Ohio 45043 (US)
(72) Inventor: OOIJ, Wim, J., Van, Fairfield, OH 45014 (US)
(74) Representative: Müller-Boré & Partner Patentanwälte
(86) International application number: US9508718
(87) International publication number: WO9704034

(56) References cited:
- EP-A- 0 230 145
- US-A- 5 108 793
- DATABASE WPI Section Ch, Week 7727 Derwent Publications Ltd., London, GB; Class A82, AN 77-48008Y & JP,A,52 063 942 ( DAINIPPON PAINT KK) , 26 May 1977
- DATABASE WPI Section Ch, Week 8346 Derwent Publications Ltd., London, GB; Class A82, AN 83-816677 & JP,A,58 168 666 ( DAINIPPON INK CHEM KK) , 5 October 1983

## Description

This invention relates to an organic powder composition and a method of using the powder composition for forming a crosslinked paint coupled to a metal substrate for protecting the substrate from corrosion. More particularly, the powder composition includes a homogeneous mixture of a thermosetting resin and a solid, non-hydrolyzed, functional organosilane coupling agent.

It is known to form a composite coating on steel sheet for providing corrosion protection. US patent 5,108,793; incorporated herein by reference, discloses rinsing a steel sheet with an alkaline solution containing a silicate, drying the sheet to form an insoluble inorganic silicate coating, rinsing the coated sheet in an aqueous solution containing an organosilane coupling agent and then drying the sheet forming a silane film on the outer surface of the silicate coating. The silicate coating provides excellent corrosion protection of the steel sheet. If the sheet is painted, the silane film acts as a coupling agent forming a strong covalent bond between the silicate coating and the paint. An embodiment of this patent includes cold-rolled and galvanized steel sheets initially treated with a phosphate conversion coating, then treated with the two step silicate/silane rinse coating and lastly electrostatically coated with a powder paint or cathodically electrocoated with a paint for forming a composite coating. The silicate/silane layer improves corrosion protection and strengthens the bond between the inner phosphate layer and the outer paint layer. A disadvantage with this process is that some of the silicate inevitably becomes transferred to the silane rinse tank thereby contaminating the silane solution. This contamination may reduce the effectiveness of the silane as a coupling agent. Another disadvantage is that hydrolyzed silane solutions have a relatively short storage life. Organosilanol solutions tend to condense and polymerize thereby minimizing their chemical interaction with paints.

It is well known to provide corrosion protection to steel sheet by coating with a liquid resin containing an organosilane coupling agent. These liquid resins have the same disadvantage referred to above in that hydrolyzed silanes have reduced effectiveness as coupling agents.

More recently, it has become known to provide corrosion protection to steel sheet by coating the sheet with a powder containing a silicone resin. US patent 5,077,354 discloses an in-situ formed polymeric mixture comprising an acrylic graft copolymer of silicone resin used as a polymeric binder in powder paint. Silicone resin and ethylenic monomers are dissolved in a solvent heated to 50-150°C and mixed until polymerization is completed. The solvent then is stripped away leaving a non-gelled polymerized binder. A disadvantage of using this powder paint is believed to be that a good bond is not formed between the paint and steel substrate. Since the silicone resin has already been reacted when in-situ combined with the ethylenic monomers when forming the acrylic polymer, the silicone resin will not act as a coupling agent between the outer acrylic layer and the steel substrate.

EP 0 230 145 describes a coating material for metal surfaces which is said to provide impact resistance, even at low temperatures. The coating utilizes the mixture of an epoxy resin, a hardener, a large particle needle-like glass powder filler material, an inorganic filler material, and a liquid aminosilane coupling agent.

Japanese Published Application (abstract) 52-63942 describes the application of a mixture of zinc powder and a water soluble silicate to a surface, followed by the application of a paint, containing a silane coupling agent and an epoxy resin, to that surface.

Japanese Published Application (abstract) 58-168666 describes a composition which comprises a thermosetting resin and an organosilane material. No use is disclosed for the composition.

U.S. Patent 5,108,793 describes a steel sheet coated with a non-toxic, relatively insoluble, inorganic, corrosion resistant coating. This coating is formed by rinsing the sheet in an alkaline aqueous solution containing a silicate and a metal salt. The sheet is then coated with an aqueous solution containing a silane, providing the final product.

Accordingly, there is a need to provide an organosilane having a long storage life that can be used as a coupling agent when forming a crosslinked coating. There is a further need for developing a low cost, environmentally safe process for forming an adherent crosslinked coating coupled to a metal substrate such as cold-rolled steel or galvanized steel.

The invention relates to an organic powder composition and a method of using the powder composition for forming a crosslinked paint coupled to a metal substrate for protecting the substrate from corrosion. The powder composition of the invention includes a homogeneous mixture of a thermosetting resin having a particle size of less than 325 mesh and a solid, non-hydrolyzed, functional low molecular weight organosilane coupling agent in a concentration in said powder mixture of 0.2-10 wt.%. The organosilane is a solid at ambient temperature, has a melting point no greater than the curing temperature of the resin and is readily dissolved into the resin when molten during crosslinking on the substrate.

Another feature of the invention includes forming a corrosion resistant coating on a metal substrate using the aforesaid powder mixture with the coating being coupled to the substrate by the organosilane. The coating is the reaction product formed by in-situ curing of the powder mixture after being deposited onto the substrate. Preferably, the crosslinked layer has a thickness of at least 10 µm.

Another feature of the invention is for the aforesaid corrosion resistant coating to be a composite coating including a non-toxic inorganic inner layer coupled to the outer crosslinked layer by the organosilane.

A further feature of the invention is forming a corrosion resistant coating on a metal substrate including the steps of providing a homogeneous powder mixture of a thermosetting resin and a solid, non-hydrolyzed, functional low molecular weight organosilane coupling agent, said powder having a particle size less than 325 mesh, depositing a layer of the powder mixture onto the substrate, heating the substrate to a temperature at least equal to the curing temperature of the resin and maintaining this temperature for sufficient time to melt the resin and the organosilane. The resin is cured and forms a crosslinked layer that becomes tightly bonded to the substrate by the organosilane.

Another feature of the invention includes the additional step of depositing an inorganic layer onto the substrate prior to depositing the powder layer.

Another feature of the invention is for the aforesaid crosslinked layer to have a thickness of at least 10 µm.

Another feature of the invention is for the aforesaid resin to have a curing temperature of 100-250°C.

Another feature of the invention is for the aforesaid inorganic layer to include a silicate.

Another feature of the invention is for the aforesaid resin being from the group consisting of epoxy, polyester, epoxy-polyester, acrylic, acrylic-urethane or fluorovinyl.

An object of the invention is to form a corrosion resistant adherent coating on a metal substrate using an organosilane coupling agent having a long storage life.

Another object is to form a corrosion resistant adherent composite coating on a metal substrate having an inorganic inner layer formed from a rinse solution having an extended storage life.

Another object is to provide a low cost, environmentally safe, process for forming a corrosion resistant adherent coating on cold-rolled or galvanized steel sheets using an organosilane coupling agent.

Advantages of the invention include a long storage life for an organosilane coupling agent, forming a corrosion resistant coating having good adherence to a variety of metal surfaces without using an environmentally hazardous waste substance, e.g. chromate rinses, and no contamination of a rinse solution containing an inorganic coating material.

The invention includes providing a homogeneously blended powder composition, i.e., a paint, including a thermosetting resin and a solid, non-hydrolyzed, functional low molecular weight organosilane coupling agent that is soluble in the thermosetting resin when molten. The organic resin may be any thermosetting polymer such as epoxy, polyester, epoxy-polyester, acrylic, acrylic-urethane or fluorovinyl. The silane may be any organic compound so long it is solid at ambient temperature, has a melting temperature no higher than the curing temperature of the resin, capable of being dissolved into the resin when molten and does not include OH groups. By a low molecular weight silane is meant monomeric, dimeric or oligomeric molecules, i.e., RSi(OX)₃.

Hydrolyzed organosilanes, such as NH₂-(CH₂)₃Si(OH)₃, are undesirable because they are liquid at ambient temperature and tend to polymerize quickly. Although solid, non-hydrolyzed organosilanes react more slowly than hydrolyzed organosilanes, the non-hydrolyzed forms do not polymerize as rapidly. For epoxy, polyester and acrylic resins, the following commercially available alkoxy silanes and chlorosilanes could be used: triphenylethoxysilane, triphenylfluorosilane, phenylallyldichlorosilane, N-phenylaminopropyltrimethoxysilane, neophylmethyldiethoxysilane (or the dimethoxy version), n-octadecyldimethylmethoxysilane, n-octadecyldimethyl[3-trimethoxysilyl-propyl] ammoniumchloride, 2-(3,4-epoxyclyclohexyl)ethyltrimethoxysilane, t-butyldiphenylmethoxysilane, phenethyltrimethoxysilane and styrylethyltrimethoxysilane. For fluorovinyl resins such as PVDF or PTFE, the following commercially available silanes could be used: [2-(perfluorohexyl)ethyl]trichlorosilane, [2-(perfluorooctyl)ethyl]trichlorosilane, 1H, 1H, 2H, 2H# perfluoralkyltriethoxysilane, 3,3,3-trifluoropropyltriethoxysilane or (heptafluoroisopropoxy)propyltriethoxysilane. A preferred silane is 3-(N-styrylmethyl-2-aminoethylamino)-propyltrimethoxysilanehydrochloride having the following structure:

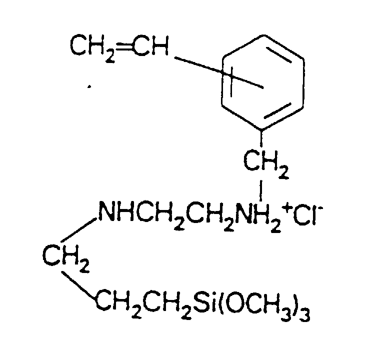

The blended resin/organosilane mixture preferably is used as paint with the mixture including one or more additional powder additives such as a pigment and a filler. For example, one or more of titanium oxide, lead oxide, zinc oxide, silica, calcium oxide, calcium carbonate, chromium oxide, carbon black and mixtures thereof may be used as a pigment. One or more of clay, silica, talc, mica, woolastomite and wood flower may be used as a filler. The powders of the mixture have a particle size less than 325 mesh. The curing temperature of the resin preferably is within the range of about 100-250°C. The composition of the mixture, including any additives, preferably should be 0.2-10 wt.% organosilane. The concentration of the organosilane should be at least 0.2 wt.% because this amount is needed so that the silane diffuses to the interface of the metal substrate. The concentration of the organosilane should not exceed 10 wt% because it may adversely affect the paint properties, may cause the paint to become plasticized and may weaken the covalent bond between the paint layer and the metal substrate by weak boundary layer effects.

The blended resin/organosilane mixture will form a very adherent, corrosion resistant, crosslinked coating or paint coupled to a metal substrate by the silane. The coating can be formed on a variety of metal surfaces including, but not limited to, hot rolled and pickled steel sheets, cold-rolled steel sheets, stainless steel sheets, hot dip metallic coated steel sheets, electroplated metallic coated steel sheets, aluminum sheets and aluminum alloy sheets. The metallic coating may include one or more layers of lead, lead alloy, nickel, nickel alloy, nickel terne, zinc, zinc alloy, aluminum, aluminum alloy, and the like. A phosphate conversion coating also may be applied to these steel sheets prior to being coated with the resin/organosilane powder mixture. The metal substrate may include continuous strip and foil, sheets cut to length as well as bars, angles, tubes and beams.

After the resin/organosilane powder mixture is applied to a metal substrate, the substrate is heated to at least the curing temperature of the resin. The resin and organosilane melt with the silane being dissolved into the liquid resin. Prior to the resin being crosslinked and becoming solid, the silane will have interacted with the resin and have migrated to the surface of the substrate. The silane reacts with OH groups on the surface of the substrate forming a strong covalent bond of the type: 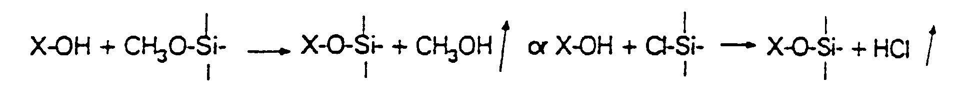 where X is a metal oxide on the surface of the substrate or an inorganic layer. The oxides of some metals include OH groups. In the case where the metal substrate is aluminum, an aluminum alloy or a steel sheet coated with aluminum or an aluminum alloy, the silane may react with the OH groups present in the aluminum oxide surface of the substrate forming a covalent bond of the type Me-O-Si-. In the case where the metal substrate is steel or a steel substrate coated with a metallic coating other than aluminum or an aluminum alloy, the substrate first should be preferably coated with an inner inorganic silicon containing layer having OH groups prior to deposition of the resin/organosilane powder mixture. The inorganic layer may be a silicate or a silica. In the latter case, the silane reacts with the OH groups present in the inorganic silicon containing layer forming a strong covalent bond of the type Si-O-Si- which is preferred to the Me-O-Si-bond described above.

While the silane is reacting with the OH groups on the surface of the metal substrate during curing of the resin, the functional group of the silane also will have interacted with a functional group in the resin or the crosslinker in the resin, e.g., 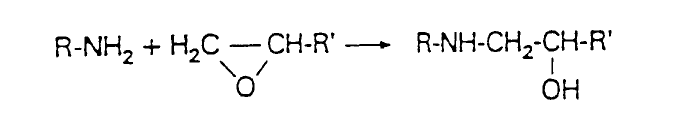 where R may be -(CH₂)₃Si(OCH₃)₃ and R' is the thermosetting resin, e.g., epoxy.

In a preferred embodiment, the corrosion resistant coating is a composite of the previously described inner inorganic layer and the outer crosslinked paint layer. Preferably, the inner layer is a silicate formed in a manner as described in US patent 5,108,793; incorporated herein by reference. Waterglass is dissolved in water, e.g., an alkaline solution containing Ba(NO₃)₃ addition. The solution preferably is maintained at an elevated temperature, e.g., 55-60°C to reduce the rinse time. A steel strip is rinsed with the silicate solution preferably by dipping the strip into the solution for at least 20 seconds. After dipping, the strip is rinsed and dried. The silicate coating provides excellent corrosion protection for the steel strip.

The silicate coated strip then is coated with a layer having a uniform thickness of the blended powder mixture of the thermosetting powder and organosilane powder. The organic powder may be applied to the strip by electrostatic spray guns such as disclosed in US patent 5,059,446; incorporated herein by reference, or by passing the strip through an electrostatically charged fluidized bed. If the fluidized bed is not electrostatically charged, the strip must be preheated. The strip is heated to at least the curing temperature of the thermosetting resin by first passing the powder coated strip preferably through an induction coil. The heated strip then passes through another heater such as infrared for maintaining the molten resin for sufficient time so that the organosilane becomes dissolved into and diffuses to a surface of the steel strip. An important feature of the invention is that the organosilane be soluble with the thermosetting resin. That is, the organosilane must be capable of being melted as well as go into solution with the molten resin. During this time period, the organosilane also migrates toward the inorganic inner layer, e.g., silicate, thereby establishing a tight covalent bond between the inorganic layer and the crosslinked outer paint layer.

Details of a blended resin/organosilane mixture of the invention will be better understood from the following example. A powder containing a thermosetting resin and optionally one or more fillers or pigments is prepared in a conventional manner. Thereafter, a solid, non-hydrolyzed low molecular weight organosilane is blended with the powder mixture by cryogenic grinding until a homogeneous powder resin/organosilane paint containing at least 0.2 wt.% silane is formed.

A preferred embodiment of a metal substrate coated with an adherent corrosion resistant composite coating of the invention formed from the above described blended resin/organosilane powder mixture now will be described. A steel strip is solvent cleaned of dirt, oil and other surface contaminants. The strip then is rinsed for 20-30 seconds with a solution having a pH of about 12, a temperature of about 55-60°C and containing 0.005 M of one of waterglass, sodium silicate or sodium metasilicate and 0.005 M of one of Ba(NO₃)₂ or Ca(NO₃)₂. After being dried, the silica or silicate coated strip then is coated with the above described blended resin/organosilane mixture of the invention such as with electrostatic spray guns or by being passed through a fluidized bed. When being coated using electrostatic guns, the strip preferably is at ambient temperature. When being coated using a fluidized bed, the strip preferably is preheated to an elevated temperature. The powder coated strip then would be heated in a conventional manner such as by induction, infrared and the like, to at least the curing temperature of the thermosetting resin. The strip would be maintained at this temperature for sufficient time to melt the resin and silane, dissolve the silane into the resin and diffuse the silane to the surface of the inorganic silicon coating. The strip now would be coated with an adherent, durable, corrosion resistant composite coating having an outer crosslinked paint layer bonded to an inner inorganic layer by an organosilane. This coated steel would have particular advantages over ordinary painted steels because the interface between the steel and the paint, i.e., the silicon containing inorganic layer, is very resistant to moisture. Thus, the composite coated strip of the invention can advantageously be used in wet environments.

## Claims

1. An organic powder composition for protecting metal from corrosion,
comprising:
a homogeneous powder mixture of a thermosetting resin and a solid, non-hydrolyzed low molecular weight organosilane coupling agent wherein said organosilane is soluble with said resin when molten, said organosilane being a solid at ambient temperature and having a melting point no greater than the curing temperature of said resin, and wherein the concentration of said organosilane in said powder mixture is 0.2-10 wt.% and said mixture has a particle size less than 325 mesh.

2. The mixture of claim 1 wherein said organosilane is of the form of 3-(N-styrylmethyl-2-aminoethylamino)propyltrimethoxysilanehydrochloride.

3. The mixture of claim 1 wherein said resin has a curing temperature of 100-250°C.

4. The mixture of claim 1 wherein said resin is from the group consisting of epoxy, polyester, epoxy-polyester, acrylic, acrylic-urethane or fluorovinyl.

5. The mixture of claim 1 including one or more of a pigment and a filler.

6. A metal having a corrosion resistant coating, comprising:
a crosslinked layer coupled to a metal substrate, said crosslinked layer being the reaction product formed by curing a powder, said powder having a particle size less than 325 mesh and being a blended mixture of a thermosetting resin and 0.2-10 wt % of a solid, non-hydrolyzed low molecular weight organosilane, said organosilane being a solid at ambient temperature and having a melting point no greater than the curing temperature of said resin, said crosslinked layer being coupled to said substrate by said organosilane.

7. The metal of claim 6 wherein the coating includes a non-toxic, inorganic inner layer, said crosslinked layer being coupled to said inner layer by said organosilane.

8. The metal of claim 7 wherein said inner layer is a silicate.

9. The metal of claim 6 wherein said crosslinked layer has a thickness of at least 10 µm.

10. The metal of claim 9 wherein said resin has a curing temperature of 100-250°C.

11. A method of forming a corrosion resistant coating on metal, comprising the steps of:
providing a homogeneous powder mixture, said powder having a particle size less than 325 mesh, including a thermosetting resin and an non-hydrolyzed low molecular weight organosilane coupling agent wherein said organosilane is soluble with said resin, when molten, said organosilane being a solid at ambient temperature and having a melting point no greater than the curing temperature of said resin, depositing a layer of said mixture onto a metal substrate, heating said substrate to a temperature at least equal to the curing temperature of said resin, and maintaining said substrate at said temperature for sufficient time to melt said resin and said organosilane whereby said organosilane is dissolved into said resin, said resin being crosslinked and said organosilane being diffused to the surface of said substrate whereby said crosslinked coating is coupled to said substrate by said organosilane.

12. The method of claim 11 including the additional step of depositing an inorganic layer on said substrate prior to deposition of said mixture.

13. The method of claim 12 wherein said inorganic layer is a silicate having a thickness of at least 2 nm.

14. The method of claim 11 wherein said powder mixture is deposited electrostatically.

15. The method of claim 11 wherein said resin has a curing temperature of 100-250°C.

16. The method of claim 11 wherein the concentration of said organosilane in said mixture is 0.2-10 wt. %.

17. A method of forming a corrosion resistant composite coating on a steel strip, comprising the steps of:
providing a rinsing solution and a homogeneous powder mixture, said powder having a particle size less than 325 mesh,
said rinsing solution including an alkaline inorganic silicate and a metal salt, said mixture including a thermosetting resin having a curing temperature of 100-250°C and a solid, non-hydrolyzed low molecular weight organosilane coupling agent wherein said organosilane is soluble with said resin when molten, said organosilane being a solid at ambient temperature and having a melting point no greater than the curing temperature of said resin, the concentration of said organosilane in said mixture being 0,2-10 wt. %.
rinsing the steel strip with said solution,
drying the steel strip thereby forming a relatively insoluble silicate layer,
electrostatically depositing a layer of said mixture onto said silicate layer,
heating the steel strip to a temperature at least equal to the curing temperature of said resin, and
maintaining the steel strip at said temperature for sufficient time to melt said resin and said organosilane whereby said resin forms a crosslinked layer,
said crosslinking layer being coupled to said silicate layer by said organosilane.

## Patentansprüche

1. Organische Pulverzusammensetzung zum Schützen von Metall vor Korrosion, umfassend:
eine homogene Pulvermischung eines duroplastischen Harzes und eines festen, nicht hydrolysierten Organosilan-Kopplungsmittels mit niedrigem Molekulargewicht, wobei das Organosilan in dem Harz, wenn dieses geschmolzen ist, löslich ist, das Organosilan bei Umgebungstemperatur ein Feststoff ist und einen Schmelzpunkt nicht höher als die Härtungstemperatur des Harzes aufweist und wobei die Konzentration des Organosilans in der Pulvermischung von 0,2 bis 10 Gew.-% beträgt und die Mischung eine Teilchengröße geringer als 325 mesh aufweist.

2. Mischung nach Anspruch 1, wobei das Organosilan in Form von 3-(N-Styrylmethyl-2-aminoethylamino)propyltrimethoxysilanhydrochlorid vorliegt.

3. Mischung nach Anspruch 1, wobei das Harz eine Härtungsstemperatur von 100 bis 250°C aufweist.

4. Mischung nach Anspruch 1, wobei das Harz aus der Gruppe, bestehend aus Epoxy, Polyester, Epoxy-Polyester, Acryl, Acryl-Urethan oder Fluorvinyl, ist.

5. Mischung nach Anspruch 1, enthaltend einen oder mehrere aus einem Pigment und einem Füllstoff.

6. Metall mit einem korrosionsbeständigen Überzug, umfassend:
eine an ein Metallsubstrat gekoppelte vernetzte Schicht, wobei die vernetzte Schicht das durch Härten eines Pulvers gebildete Reaktionsprodukt ist, das Pulver eine Teilchengröße geringer als 325 mesh aufweist und eine gemischte Mischung eines duroplastischen Harzes und 0,2 bis 10 Gew.-% eines festen nichthydrolysierten Organosilans mit niedrigem Molekulargewicht ist, das Organosilan bei Umgebungstemperatur fest ist und einen Schmelzpunkt nicht höher als die Härtungstemperatur des Harzes aufweist, wobei die vernetzte Schicht an das Substrat durch das Organosilan gekoppelt ist.

7. Metall nach Anspruch 6, wobei der Überzug eine nichttoxische, anorganische innere Schicht einschließt, wobei die vernetzte Schicht an die innere Schicht durch das Organosilan gekoppelt ist.

8. Metall nach Anspruch 7, wobei die innere Schicht ein Silikat ist.

9. Metall nach Anspruch 6, wobei die vernetzte Schicht eine Dicke von mindestens 10 µm aufweist.

10. Metall nach Anspruch 9, wobei das Harz eine Härtungstemperatur von 100 bis 250°C aufweist.

11. Verfahren zum Bilden eines korrosionsbeständigen Überzugs auf Metall, umfassend die Schritte:
- Bereitstellen einer homogenen Pulvermischung, wobei das Pulver eine Teilchengröße geringer als 325 mesh aufweist, welche ein duroplatisches Harz und ein nicht hydrolysiertes Organosilan-Kopplungsmittel von niederem Molekulargewicht einschließt, wobei das Organosilan in dem Harz, wenn dieses geschmolzen ist, löslich ist, das Organosilan bei Umgebungstemperatur ein Feststoff ist und einen Schmelzpunkt nicht höher als die Härtungstemperatur des Harzes aufweist,
- Aufbringen einer Schicht der Mischung auf ein Metallsubstrat,
- Erhitzen des Substrats auf eine Temperatur, welche mindestens gleich der Härtungstemperatur des Harzes ist und
- Halten des Substrats bei der Temperatur für eine ausreichende Zeit, um das Harz und das Organosilan zu schmelzen, wodurch das Organosilan in dem Harz gelöst wird, das Harz vernetzt wird und das Organosilan zu der Oberfläche des Substrats diffundiert, wodurch der vernetzte Überzug an das Substrat durch das Organosilan gekoppelt wird.

12. Verfahren nach Anspruch 11, einschließend den zusätzlichen Schritt des Auftragens einer anorganischen Schicht auf das Substrat vor dem Auftragen der Mischung.

13. Verfahren nach Anspruch 12, wobei die anorganische Schicht ein Silikat mit einer Dicke von mindestens 2 nm ist.

14. Verfahren nach Anspruch 11, wobei die Pulvermischung elektrostatisch aufgetragen wird.

15. Verfahren nach Anspruch 11, wobei das Harz eine Härtungstemperatur von 100 bis 250°C aufweist.

16. Verfahren nach Anspruch 11, wobei die Konzentration des Organosilans in der Mischung 0,2 bis 10 Gew.-% beträgt.

17. Verfahren zum Bilden einer korrosionsbeständigen Komposit-Beschichtung auf einem Stahlstreifen, umfassend die Schritte:
- des Bereitstellens einer Spüllösung und einer homogenen Pulvermischung, wobei das Pulver eine Teilchengröße von weniger als 325 mesh aufweist, wobei die Spüllösung ein alkalisches anorganisches Silikat und ein Metallsalz einschließt, wobei die Mischung ein wärmehärtendes Harz mit einer Härtungstemperatur von 100 bis 250°C und ein festes, nicht hydrolysiertes Organosilankupplungsmittel mit einem niedrigen Molekulargewicht einschließt, wobei das Organosilan in dem Harz löslich ist, wenn dieses geschmolzen ist, das Organosilan bei Umgebungstemperatur ein Feststoff ist und einen Schmelzpunkt nicht höher als die Härtungstemperatur des Harzes aufweist und die Konzentration des Organosilans in der Mischung 0,2 bis 10 Gew.-% beträgt,
- des Spülens des Stahlstreifens mit dieser Lösung,
- des Trocknens des Stahlstreifens, wodurch eine relativ unlösliche Silikatschicht gebildet wird,
- des elektrostatischen Auftragens einer Schicht dieser Mischung auf die Silikatschicht,
- des Erwärmens des Stahlstreifens auf eine Temperatur, welche mindestens gleich der Härtungstemperatur des Harzes ist und
- des Haltens des Stahlstreifens bei der Temperatur für eine ausreichende Zeit, um das Harz und das Organosilan zu schmelzen, wodurch das Harz eine vernetzte Schicht bildet,
- wobei die Vernetzungsschicht durch das Organosilan an die Silikatschicht gekoppelt wird.

## Revendications

1. Composition organique en poudre destinée à protéger un métal de la corrosion, comprenant :
un mélange en poudre homogène d'une résine thermodurcissable et d'un agent de couplage formé d'un organosilane solide non hydrolysé de bas poids moléculaire, qui est soluble dans cette résine à l'état fondu, cet organosilane étant solide à la température ambiante et ayant un point de fusion non supérieur à la température de maturation de la résine, et la concentration de cet organosilane dans ce mélange en poudre est de 0,2 à 10 % en poids, et ce mélange a un diamètre de particules inférieur à l'ouverture de maille d'un tamis N° 325.

2. Mélange suivant la revendication 1, dans lequel l'organosilane est sous la forme du chlorhydrate de 3-(N-styrylméthyl-2-aminoéthylamino)propyltriméthoxysilane.

3. Mélange suivant la revendication 1, dans lequel la résine a une température de maturation de 100 à 250°C.

4. Mélange suivant la revendication 1, dans lequel la résine est choisie dans le groupe consistant en époxy, polyester, époxy-polyester, acrylique, acrylique-uréthanne ou fluorovinylique.

5. Mélange suivant la revendication 1, contenant un ou plusieurs pigments et une ou plusieurs charges.

6. Métal portant un revêtement résistant à la corrosion, comprenant :
une couche réticulée couplée à un substrat métallique, cette couche réticulée étant le produit de réaction formé par maturation d'une poudre, cette poudre ayant un diamètre de particules inférieur à l'ouverture de maille d'un tamis N° 325 et étant un mélange composé d'une résine thermodurcissable et de 0,2 à 10 % en poids d'un organosilane solide non hydrolysé de bas poids moléculaire, cet organosilane étant solide à la température ambiante et ayant un point de fusion non supérieur à la température de maturation de la résine en question, cette couche réticulée étant couplée au substrat par l'organosilane.

7. Métal suivant la revendication 6, dont le revêtement contient une couche interne inorganique non toxique, la couche réticulée étant couplée à cette couche interne par l'organosilane.

8. Métal suivant la revendication 7, pour lequel la couche interne est un silicate.

9. Métal suivant la revendication 6, pour lequel la couche réticulée a une épaisseur d'au moins 10 µm.

10. Métal suivant la revendication 9, pour lequel la résine a une température de maturation de 100 à 250°C.

11. Procédé pour former un revêtement résistant à la corrosion sur un métal, qui comprend les étapes consistant :
à préparer un mélange homogène en poudre ayant un diamètre de particules inférieur à l'ouverture de maille d'un tamis N° 325, comprenant une résine thermodurcissable et un agent de couplage formé d'un organosilane non hydrolysé de bas poids moléculaire, cet organosilane étant soluble dans la résine à l'état fondu, étant solide à la température ambiante et ayant un point de fusion non supérieur à la température de maturation de la résine, à déposer une couche de ce mélange sur le substrat de métal, à chauffer ce substrat à une température au moins égale à la température de maturation de résine et à maintenir ce substrat à la température indiquée pendant une durée suffisante pour faire fondre la résine et l'organosilane de manière que ce dernier se dissolve dans la résine, cette résine étant réticulée et l'organosilane diffusant à la surface du substrat, ce qui a pour effet que le revêtement réticulé est couplé au substrat par l'organosilane.

12. Procédé suivant la revendication 11, comprenant l'étape supplémentaire de dépôt d'une couche inorganique sur le substrat avant le dépôt du mélange.

13. Procédé suivant la revendication 12, dans lequel la couche inorganique est une couche de silicate ayant une épaisseur d'au moins 2 nm.

14. Procédé suivant la revendication 11, dans lequel le mélange en poudre est déposé par voie électrostatique.

15. Procédé suivant la revendication 11, dans lequel la résine a une température de maturation de 100 à 250°C.

16. Procédé suivant la revendication 11, dans lequel la concentration de l'organosilane dans le mélange est de 0,2 à 10 % en poids.

17. Procédé pour former un revêtement composite résistant à la corrosion sur un feuillard d'acier, qui comprend l'étape consistant :
à préparer une solution de rinçage et un mélange homogène en poudre ayant un diamètre de particules inférieur à l'ouverture de maille d'un tamis N° 325, la solution de rinçage en question contenant un silicate inorganique alcalin et un sel de métal, ce mélange contenant une résine thermodurcissable ayant une température de maturation de 100 à 250°C et un agent de couplage formé d'un organosilane solide non hydrolysé de bas poids moléculaire qui est soluble dans la résine en question à l'état fondu, cet organosilane étant solide à la température ambiante et ayant un point de fusion non supérieur à la température de maturation de la résine, la concentration de l'organosilane dans ce mélange étant de 0,2 à 10 % en poids,
à rincer le feuillard d'acier avec la solution indiquée,
à sécher le feuillard d'acier de manière à former une couche de silicate relativement insoluble,
à déposer par voie électrostatique une couche du mélange en question sur la couche de silicate,
à chauffer le feuillard métallique à une température au moins égale à la température de maturation de la résine, et
à maintenir le feuillard d'acier à la température en question pendant une durée suffisante pour faire fondre la résine et l'organosilane, la résine formant ainsi une couche réticulée,
cette couche réticulée étant couplée à la couche de silicate par l'organosilane.
